# EUROPÄISCHE PATENTSCHRIFT

(11) **EP 1 813 381 B1**
(45) Veröffentlichungstag und Bekanntmachung des Hinweises auf die Patenterteilung: **20.08.2008**
(21) Anmeldenummer: 07000408.0
(22) Anmeldetag: 10.01.2007
(51) Int. Cl.: B23Q 1/00, B23Q 3/18

(54) **Spanneinrichtung mit einem Spannfutter zum Festspannen eines Spannteils**
Clamping device with a clamping chuck for holding a clamping piece
Dispositif de serrage doté d'un mandrin pour le serrage fixe d'un élément de serrage

(30) Priorität: 30.01.2006 CH 1512006
(43) Veröffentlichungstag der Anmeldung: 01.08.2007
(73) Patentinhaber: F-Tool International AG, 5040 Schoeftland (CH)
(72) Erfinder: Troxler, Ferdinand, 6214 Schenkon (CH)
(74) Vertreter: Rottmann, Maximilian

(56) Entgegenhaltungen:
- DE-A1- 3 710 472
- DE-C1- 3 919 077

## Beschreibung

Die vorliegende Erfindung bezieht sich auf eine Spanneinrichtung mit einem Spannfutter zum Festspannen eines Spannteils gemäss dem oberbegriff von Anspruch 1.

Derartige Spanneinrichtungen werden bevorzugt zum positionsdefinierten Aufspannen eines Spannteils, insbesondere in der Form eines Werkstücks, Werkzeugs oder einer Palette im Arbeitsbereich einer Bearbeitungsmaschine eingesetzt. Das Spannfutter ist dabei üblicherweise im Arbeitsbereich der Bearbeitungsmaschine fixiert, während das Spannteil lösbar am Spannfutter festspannbar ist.

Aus der EP-A-111 092 ist eine Kupplungsvorrichtung zur drehfesten und auswechselbaren Verbindung eines Werkstücks mit einer Bearbeitungseinrichtung bekannt. Die Kupplungsvorrichtung besteht aus zwei Kupplungsorganen, wovon das eine als Spannfutter ausgebildet und mit der Bearbeitungseinrichtung verbunden wird, während das andere die Palette bildet und das zu bearbeitende Werkstück trägt. Das mit der Bearbeitungseinrichtung verbundene Kupplungsorgan ist mit einem zentralen Zapfen sowie einem exzentrisch dazu angeordneten Mitnehmerzapfen versehen. Das zur Aufnahme eines Werkstücks vorgesehene Kupplungsorgan -Palette- ist mit als Z-Anschlag wirkenden Abstandszapfen sowie einer Mitnehmerscheibe versehen, die eine zentrale Öffnung sowie eine exzentrisch dazu angeordnete, im wesentlichen ovale Öffnung aufweist. Beim Festspannen des einen am anderen Kupplungsorgan richten sich der zentrale Zapfen sowie der exzentrisch dazu angeordneten Mitnehmerzapfen an den entsprechenden Öffnungen der Mitnehmerscheibe aus und die Abstandszapfen des einen Kupplungsorgans kommen am anderen Kupplungsorgan zur Anlage. Bei einer derartigen Kupplungsvorrichtung ist die Mitnehmerscheibe exponiert und damit insbesondere der Gefahr von mechanischen Beschädigungen ausgesetzt. Zudem müssen sämtliche zur Aufnahme eines Werkstücks vorgesehenen Paletten mit einer solchen Mitnehmerscheibe ausgerüstet werden, was kostenaufwändig ist, da üblicherweise jedem Spannfutter mehrere Paletten zugeordnet sind.

Die DE 39 19 077 C1 betrifft eine Vorrichtung zum positionsdefinierten Aufspannen eines Werkstücks auf dem Bearbeitungstisch einer Werkzeugmaschine. Der Bearbeitungstisch ist mit mindestens zwei im Abstand voneinander angeordneten Tragkörpem versehen, die vier kreuzweise angeordnete Zentrierzapfen aufweisen. Die Werkstückaufnahme besitzt zwei Zentrierorgane. Das eine Zentrierorgan ist mit vier korrespondierend zu den Zentrierzapfen angeordneten Zentrierschlitzen versehen, und das andere Zentrierorgan besitzt zwei Zentrierschlitze, die auf der Verbindungslinie durch die Zentren der beiden Zentrierorgane liegen.

Die DE 37 10 472 A1 betrifft eine Vorrichtung zur lösbaren Befestigung von Werkzeugen an einem Handhabungsgerät, z. B. einem Industrieroboter. Sie umfasst eine Werkzeugaufnahme und ein am Handhabungsgerät angebrachtes Kupplungsorgan, in welchem die Werkzeugaufnahme formschlüssig verriegelt und lösbar befestigt ist. Das Kupplungsorgan besitzt eine freie Stirnfläche, gegen welche die befestigte Werkzeugaufnahme anliegt, sowie eine Mehrzahl von Kanälen und elektrischen Kontakten, die in der freien Stirnfläche münden. Im Bereich der freien Stirnfläche des Kupplungsorgans ist eine Mehrzahl von vorstehenden, gegen die Spitze hin konisch verjüngten Zentrierzapfen vorgesehen. Die Werkzeugaufnahme besitzt einen zur Anlage an die freie Stirnfläche des Kupplungsorgans ausgebildeten Flächenabschnitt, der mit korrespondierend angeordneten Kanälen und elektrischen Kontakten versehen ist. Im Bereich dieses Flächenabschnitts ist eine in Axialrichtung federelastische, in Umfangsrichtung starre Zentrierplatte angeordnet, die korrespondierend zu den Zentrierzapfen des Kupplungsorgans angeordnete Öffnungen besitzt, welche bei befestigter Werkzeugaufnahme den konisch verjüngten Teil der Zentrierzapfen zumindest teilweise übergreifen.

Die Erfindung zielt darauf ab, eine Spannvorrichtung mit einem Spannfutter zum Einspannen eines Spannteils derart weiterzubilden, dass das Spannteil ohne aufwändige Bearbeitung einfach und schnell mit den für die Positionierung des Spannteils am Spannfutter notwendigen Zentriermitteln versehen werden kann, wobei die am Spannteil anzubringenden Zentriermittel einfach und kostengünstig gestaltet sein sollen, und wobei das Spannteil mit hoher Positionier- und Repetiergenauigkeit am Spannfutter festspannbar sein soll.

Hierzu wird nach der Erfindung eine Spannvorrichtung gemäss dem Anspruch 1 bereitgestellt.

Bevorzugte Ausführungsformen und Weiterbildungen des Erfindungsgegenstandes sind in den abhängigen Ansprüchen 2-17 umschrieben.

Im folgenden wird ein Ausführungsbeispiel der erfindungsgemässen Spanneinrichtung unter Bezugnahme auf die beiliegenden Zeichnungen näher erläutert. In den Zeichnungen zeigen:
- Fig. 1: eine perspektivische Ansicht der Spanneinrichtung, namentlich eines Spannfutters mitsamt einem daran festzuspannenden Spannteil;
- Fig. 2: einen Längsschnitt durch das Spannfutter sowie das Spannteil, und
- Fig. 3: einen Längsschnitt durch das Spannfutter mit daran festgespanntem Spannteil.

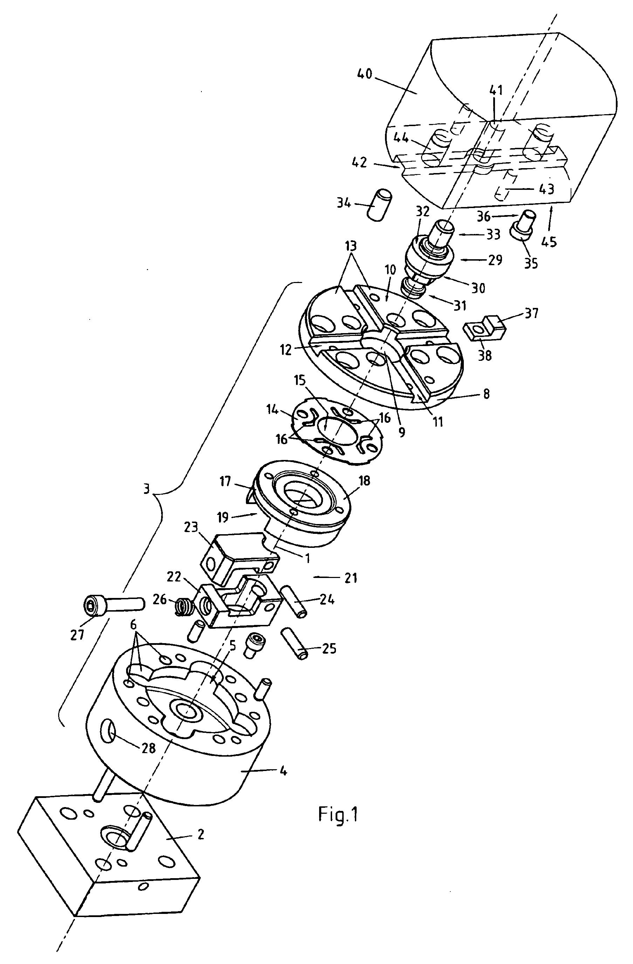

Die Figur 1 zeigt in einer perspektivischen Ansicht die Spannvorrichtung zum Festspannen eines hier beispielhaft dargestellten Spannteils 40 an einem Spannfutter 3. Der Begriff Spannteil wird hier stellvertretend für alle Arten von Teilen verwendet, welche an dem Spannfutter 3 fixiert werden können, wobei das jeweilige Spannteil insbesondere in Form eines Werkstücks, Werkzeugs oder einer Palette ausgebildet ist. Die zum Befestigen der einzelnen Teile des Spannfutters notwendigen Elemente wie beispielsweise Schrauben sind nicht dargestellt.

Eine durch das Spannfutter 3 sowie das Spannteil 40 führende Längsmittelachse ist mit der Z-Achse identisch und generell mit dem Bezugszeichen 1 versehen. Unterhalb des Spannfutters 3 ist eine Platte 2 eingezeichnet, an der das Spannfutter 3 befestigt werden kann. Die Platte 2 ist stellvertretend für eine maschinenseitig vorhandene Unterlage wie beispielsweise einen Maschinentisch oder eine Maschinenpinole eingezeichnet. Anstelle einer Platte 2 kann das Spannfutter 3 jedoch auch an einer Grundplatte, Adapterplatte oder dergleichen befestigt werden, welche ihrerseits mit Kupplungselementen zum Fixieren an einer entsprechenden Kupplungsvorrichtung oder Aufnahme versehen sein kann.

Das Spannfutter 3 besteht aus einem zylindrischen Grundkörper 4, der mit einer zentralen Ausnehmung 5 sowie einer Vielzahl von Befestigungsbohrungen, Gewinden etc. versehen ist, welche gesamthaft mit dem Bezugszeichen 6 versehen sind. Den vorderen Abschluss des Spannfutters 3 bildet eine Auflageplatte 8, die mit einer zentralen Öffnung 9 sowie kreuzförmig in die Oberfläche 10 eingelassene Nuten 11, 12 versehen ist. Durch diese Nuten 11, 12 wird die Auflageplatte 8 in vier kreisausschnittförmige Abschnitte 13 unterteilt, deren plane Oberflächen die Z-Auflage für das am Spannfutter 3 zu befestigende Spannteil 40 bilden. Auf der Rückseite der Auflageplatte 8 ist eine Zentrierscheibe 14 angeordnet, welche mit einer zentralen Zentrieröffnung 15 versehen ist, deren Randbereich -Kante- federelastisch nachgiebig gestaltet ist. Um den Bereich um die Zentrieröffnung 15 herum federelastisch nachgiebig zu gestalten, ist die Zentrierscheibe 14 mit Schlitzen 16 versehen. Im zusammengebauten Zustand des Spannfutters 3 ist die Zentrierscheibe 14 geschützt hinter der Auflageplatte 8 angeordnet. Im weiteren ist eine Halteplatte 17 vorgesehen, die mit einem kreisringförmig erhabenen Randsteg 18 versehen ist, auf dem die Zentrierscheibe 14 derart aufzuliegen kommt, dass sie nach unten in Richtung der Platte 2 federelastisch ausgelenkt werden kann. In die Rückseite der Halteplatte 17 ist eine Nut 19 eingelassen, die der schwimmenden Aufnahme eines Spannmechanismus 21 dient, der anschliessend noch näher erläutert wird. Sowohl die Halteplatte 17 wie auch der Spannmechanismus 21 finden in der zentralen Ausnehmung 5 des Grundkörpers 4 Platz.

Schliesslich umfasst die Spannvorrichtung noch zumindest einen Spannzapfen 29 sowie einen Ausrichtstift 34, einen Ausrichtbolzen 35 oder einen Ausrichtnocken 37. Vorzugsweise ist der Spannzapfen 29 mit einem Gewinde 33 versehen, welches eine schnelle Befestigung des Spannzapfens 29 auf der Unterseite 45 des Spannteils 40 in einer zentralen Gewindebohrung 41 erlaubt. Der Ausrichtstift 34 kann mittels eines Presssitzes in einer Bolzenbohrung 44 des Spannteils 40 befestigt werden, während der Ausrichtbolzen 35 beispielsweise mit eine Gewinde 36 versehen ist, mittels welchem er in einer entsprechenden Gewindebohrung 43 des Spannteils 40 befestigt werden kann. Der Ausrichtnocken 37 wird vorzugsweise innerhalb einer Nut 11, 12 der Auflageplatte 8 befestigt. Der Ausrichtstift 34 und der Ausrichtbolzen 35 wirken zum Festlegen der Winkellage des Spannteils 40 um die Z-Achse 1 in 90° Schritten mit einer der beiden Nuten 11, 12 zusammen. Anstelle von Nuten 11, 12 können ggf. auch Öffnungen, Ausnehmungen oder dergleichen vorgesehen werden.

Das Spannteil 40 weist zumindest abschnittweise eine plane Unterseite 45 auf, in die eine Längsnut 42 eingelassen ist. Diese Längsnut 42 kann im Zusammenwirken mit dem am Spannfutter 3 befestigten Ausrichtnocken 37 ebenfalls zum Festlegen der Winkellage des Spannteils 40 in 180° Schritten um die Z-Achse 1 genutzt werden. Der Ausrichtnocken 37 wird mit seinem Basisteil 38 in einer Nut 11, 12 der Abdeckplatte 8 befestigt. Es versteht sich, dass die Längsnut 42 nicht zwingend vorhanden sein muss, sondern dass entweder der Ausrichtstift 34 oder der Ausrichtbolzen 35 im Zusammenwirken mit den Nuten 11, 12 der Auflageplatte 8 oder alternativ die Längsnut 42 im Zusammenwirken mit dem Ausrichtnocken 37 vorgesehen werden muss. Natürlich sind noch weitere Ausführungsformen von Ausrichtelementen zum Festlegen der Winkellage des Spannteils 40 um die Z-Achse 1 denkbar, auf die hier jedoch nicht näher eingegangen wird.

Der Spannzapfen 29 ist mit einem Kopfteil 31 versehen, an dem in bekannter Weise Spannelemente des Spannmechanismus 21 angreifen können. Hinter dem Kopfteil 31 ist der Spannzapfen 29 mit einem kegelstumpfmantelförmigen Abschnitt 30 versehen, der dem Ausrichten des Spannzapfens 29, und ggf. auch des damit verbundenen Spannteils 40, an der Zentrierscheibe 14 in X- und Y-Richtung dient. Der Abschnitt 30 dient demnach dem exakten Ausrichten des Spannzapfens 29 in der parallel zur Oberfläche 10 der Auflageplatte 8 liegenden X-Y-Ebene. Der Spannzapfen 29 ist auf der Rückseite zudem mit einer ringförmigen Anschlagfläche 32 versehen, welche sich beim Fixieren des Spannzapfens 29 am Spannteil 40 an der planen Unterseite 45 des Spannteils 40 anlegt. Der axiale Abstand zwischen der ringförmigen Anschlagfläche 32 und dem kegelstumpfmantelförmigen Abschnitt 30 ist auf das Spannfutter 3 abgestimmt, wie anschliessend noch näher erläutert wird.

Der zum Festklemmen des Spannzapfens 29 vorgesehene Spannmechanismus 21 besteht aus zwei Klemmelementen in Form von L-förmigen Schiebern 22, 23, welche mittels einer Schraube 27 relativ zueinander verschiebbar sind. Die Schraube 27 ist im zusammengebauten Zustand des Spannfutters 3 über eine radiale Bohrung 28 im Grundkörper 4 zugänglich. Jeder Schieber 22, 23 ist mit einem Querstift 24, 25 versehen, der sich am Kopfteil 31 des Spannzapfens 29 anlegen bzw. davon entfernen kann, wenn die beiden Schieber 22, 23 unter der Wirkung der Schraube 27 zusammengezogen bzw. auseinandergeschoben werden.

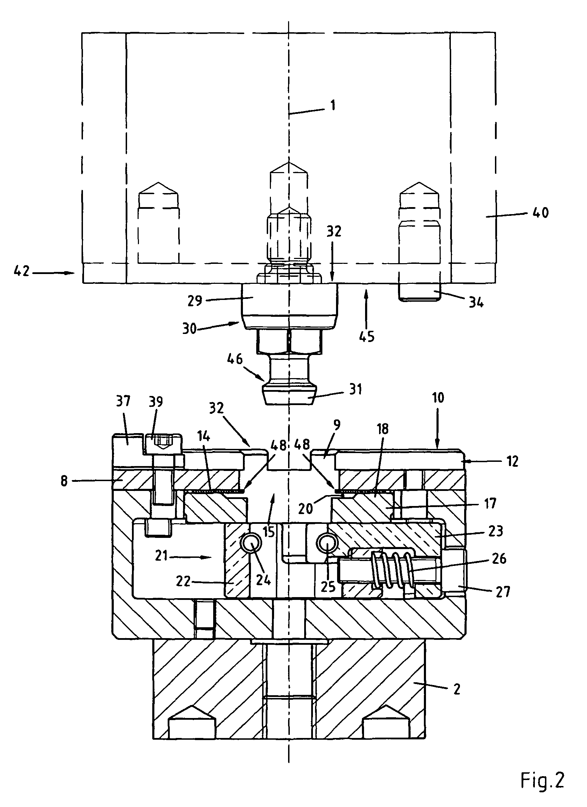

Die Figur 2 zeigt einen Längsschnitt durch das Spannfutter 3 sowie eine Seitenansicht des Spannteils 40. Aus dieser Darstellung ist u.a. der Spannmechanismus 21 ersichtlich, dessen beide Schieber 22, 23 mittels der Schraube 27 relativ zueinander verschiebbar sind. Zwischen den beiden Schiebern 22, 23 ist eine Druckfeder 26 eingespannt, welche die beiden Schieber 22, 23 in Öffnungsrichtung auseinanderzudrücken bestimmt ist. Im weiteren ist die Zentrierscheibe 14 ersichtlich, die auf dem Randsteg 18 der Halteplatte 17 aufliegt. Zwischen dem Mittelteil der Zentrierscheibe 14 und dem Mittelteil der Halteplatte 17 besteht ein Zwischenraum 20, der es erlaubt, den um die Öffnung 15 herumführenden Randbereich der Zentrierscheibe 14 in Z-Richtung, namentlich in Richtung der Platte 2, federelastisch auszulenken. Um das Spannteil 40 am Spannfutter 3 festzuspannen, wird der am Spannteil 40 befestigte Spannzapfen 29 in die zentrale Öffnung 9 der Auflageplatte 8 eingeführt und der Ausrichtstift 34 auf die Nut 12 der Auflageplatte 8 ausgerichtet bzw. der Nocken 37 auf die am Spannteil 40 angeordnete Nut 42 ausgerichtet. Beim Einführen des Spannzapfens 29 in die zentrale Öffnung 9 der Auflageplatte 8 legt sich dessen kegelstumpfmantelförmiger Zentrierabschnitt 30 an der umlaufenden Kante 48 der Öffnung 15 der Zentrierscheibe 14 an und richtet den Spannzapfen 29, und damit auch das Spannteil 40, in X- und Y-Richtung aus. Die Winkellage des Spannteils 40 um die Z-Achse 1 wird entweder durch den Ausrichtstift 34 oder den Ausrichtnocken 37 festgelegt, wobei in der Praxis nur das eine der beiden genannten Ausrichtelemente 34, 37 zum Einsatz kommt. Der Ausrichtnocken 37 ist mittels einer Schraube 39 an der Auflageplatte 8 befestigt. Anstelle des Ausrichtstifts 34 bzw. des Ausrichtnockens 37 kann, wie bereits vorgängig erwähnt, auch ein Ausrichtbolzen eingesetzt werden.

Der Spannzapfen 29 ist derart auf das Spannfutter 3 abgestimmt, dass zwischen dessen ringförmiger Anschlagfläche 32 bzw. der planen Unterseite 45 des Spannteils 40 und der als Z-Anschlag wirkenden Oberfläche 10 der Auflageplatte 8 ein axialer Abstand von einigen hunderstel- bis wenigen Zehntelmillimetern besteht, wenn sich der Spannzapfen 29 mit seinem kegelstumpfmantelförmigen Zentrierabschnitt 30 vollumfänglich an der Kante 48 der Öffnung 15 der Zentrierscheibe 14 angelegt hat. Mit anderen Worten: Wenn das Spannteil 40 lose auf das Spannfutter 3 aufgesetzt ist, besteht zwischen der Auflagefläche 10 des Spannfutters 3 und der planen Unterseite 45 des Spannteils 40 ein Spalt von einigen hunderstel- bis wenigen Zehntelmillimetern.

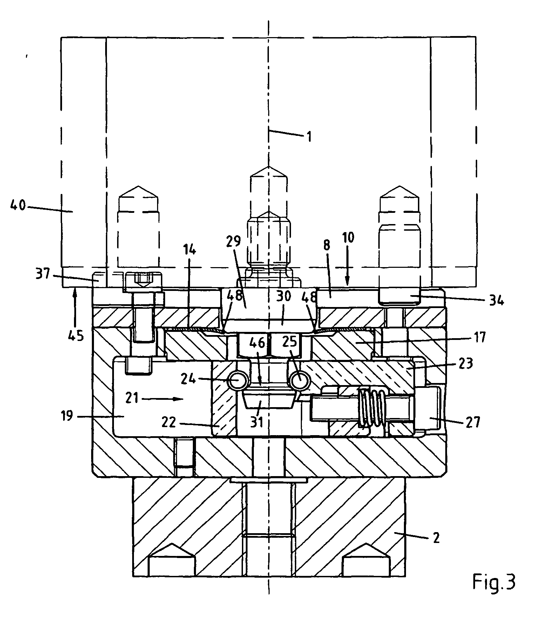

Die Fig. 3 zeigt einen Längsschnitt durch das Spannfutter 3 mit dem daran festgespannten Spannteil 40. Durch Drehen der Schraube 27 werden die beiden Schieber 23, 24 des Spannmechanismus 21 derart zueinander bewegt, dass sich die beiden Stifte 24, 25 annähern. Dadurch drücken die beiden Stifte 24, 25 auf einen auf der Rückseite des Kopfteils 31 angeordnete Druckkegel 46 des Spannzapfens 29, so dass der Spannzapfen 29 zusammen mit dem Spannteil 40 gegen das Spannfutter 3 gezogen wird und mit seiner planen Unterseite 45 auf der Oberseite 10 der Auflageplatte 8 aufzuliegen kommt. Damit ist die Position des Spannteils 40 auch in Z-Richtung festgelegt. Nach dem Festspannen des Spannteils 40 ist die Zentrierscheibe 14 federelastisch in Richtung der Platte 2 ausgelenkt.

Mit der dargestellten und beschriebenen Ausführung der Spanneinrichtung kann eine sehr genaue Zentrierung des Spannteils 40 gegenüber dem Spannfutter 3 in X- und Y-Richtung wie auch bezüglich der Winkellage um die Z-Achse 1 erreicht werden, da die Zentrierung des Spannteils 40 praktisch kräftefrei erfolgt und nicht durch den Spannmechanismus 21 beeinflusst wird. Nachdem das Spannteil 40 gegenüber dem Spannfutter 3 sehr genau ausgerichtet ist, wird das Spannteil 40 unter der Wirkung des Spannmechanismus 21 nur noch um den genannten Betrag von einigen hunderstel- bis wenigen Zehntelmillimetern in Z-Richtung an das Spannfutter 3 herangezogen und daran festgespannt. Nach dem Festspannen liegt das Spannteil 40 grossflächig auf der Oberseite 10 der Auflageplatte 8 auf und ist damit unverrückbar mit dem Spannfutter 3 verbunden. Da der Spannmechanismus 21 schwimmend in der Nut 19 der Halteplatte 17 aufgenommen ist, kann er sich beim Festspannen selber gegenüber dem Spannzapfen 29 zentrieren.

Die Vorteile der Spanneinrichtung bestehen einerseits darin, dass die vergleichsweise teuren und empfindlichen Zentrierelemente an dem Spannfutter 3 angeordnet sind, während die Zentrierelemente auf der Seite des Spannteils 40 einfach und kostengünstig gestaltet sind. Die empfindliche Zentrierscheibe 14 ist zudem geschützt hinter einer Auflageplatte 8 am Spannfutter 3 angeordnet. Dadurch ist das wichtigste Zentrierelement, die Zentrierscheibe 14, weitgehend vor mechanischen äusseren Einwirkungen geschützt und das Spannteil 40 kann wiederholt sehr genau am Spannfutter 3 fixiert werden. Das Spannteil 40 seinerseits kann sehr einfach und schnell mit den für die Spannung und Zentrierung notwendigen Elementen versehen werden. Konkret muss das Spannteil 40 nur eine zumindest abschnittweise plane Unterseite 45 sowie zumindest eine Gewindebohrung 41 zum Fixieren des Spannzapfens 29 aufweisen. Zusätzlich muss am Spannteil 40 noch zumindest ein weiteres Mittel oder Element vorgesehen werden, welches zum direkten oder indirekten Festlegen der Winkellage des Spannteils 40 um die Z-Achse 1 genutzt werden kann. Dieses Mittel oder Element kann beispielsweise in der Form einer weiteren Gewindebohrung 43, einer Stiftbohrung 44 oder einer Nut 42 in die Unterseite 45 des Spannteils 40 eingelassen werden. Während die Gewindebohrung 43 wie alternativ auch die Stiftbohrung 44 zur Aufnahme und Fixierung eines Ausrichtbolzens 35 bzw. Ausrichtstifts 34 vorgesehen sind, welche jeweils mit einer Nut 11, 12 an der Auflageplatte 8 des Spannfutters 3 zusammenwirken, dient die Nut 42 dem Ausrichten des Spannteils 40 im Zusammenwirken mit einem am Spannfutter 3 angeordneten Ausrichtnocken 37. Wie bereits erwähnt, muss jedoch nur entweder ein Ausrichtstift 34, ein Ausrichtbolzen 35 oder ein Ausrichtnocken 37 im Zusammenwirken mit einer entsprechenden Nut oder Öffnung vorgesehen werden.

Indem die für die Zentrierung in X- und Y-Richtung notwendigen Mittel direkt am Spannzapfen 29 in der Form eines kegelstumpfmantelförmig ausgebildeten Zentrierabschnitts 30 angeordnet sind, können die ansonsten für die Zentrierung in X- und Y-Richtung notwendigen, separaten Zentrierelemente entfallen. Da normalerweise jedem Spannfutter 3 mehrere Spannteile 40 zugeordnet sind, können auch die Gesamtkosten gesenkt werden, wenn die vergleichsweise teuren Zentrierelemente auf der Seite des Spannfutters 3 angeordnet werden, und damit nur einmal vorhanden sein müssen, während auf der Seite des jeweiligen Spannteils 40 die vergleichsweise günstigen Zentrierelemente angeordnet werden. Diesbezüglich sei insbesondere auch das direkte Anordnen eines Zentrierabschnitts 30 am Spannzapfen 29 erwähnt.

Mit einer derartigen Spanneinrichtung kann das Spannteil mit einer hohen Positionier- und Repetiergenauigkeit sowohl in X- und Y-Richtung wie auch bezüglich der Winkellage um die Z-Achse im Bereich von wenigen tausendstel Millimetern am Spannfutter festgespannt werden.

Anstelle eines Einfach-Spannfutters, wie es vorgängig erläutert wurde, sind auch Mehrfach-Spannfutter denkbar. Ein solches Mehrfach-Spannfutter setzt sich aus zumindest zwei Spannfuttern zusammen, die entweder separat auf einer Grundplatte angeordnet oder in einem gemeinsamen Grundfutter kombiniert werden können. Jedenfalls ist jedes Spannfutter mit einer Zentrierscheibe sowie einem Spannmechanismus versehen. Das Spannteil weist eine mit der Anzahl der Spannfutter übereinstimmende Anzahl Spannzapfen auf. Um im Falle von zwei Spannfuttern eine geometrische Überbestimmung des Spannteils gegenüber dem Spannfutter beim Festspannen zu vermeiden, ist das eine Spannfutter zum Festlegen der X- und Y-Position vorgesehen, während das andere Spannfutter dem Festspannen des zugeordneten Spannzapfens und dem Festlegen der Winkellage um die Z-Achse dient.

Das eine Spannfutter ist dazu in der vorgängig beschrieben Art ausgebildet, indem der Spannzapfen beim Einführen in das Spannfutter an der Zentrierscheibe in X- und Y-Richtung ausgerichtet wird. Das weitere Spannfutter dient einerseits dem Festspannen des weiteren Spannzapfens. Andererseits soll mit dem zweiten Spannfutter die Winkellage des Spannteils um die Z-Achse festgelegt werden. Dazu ist der am Spannzapfen 29 angeordnete Zentrierabschnitt 30 vorzugsweise so ausgebildet, dass er sich nicht entlang seines gesamten Umfangs an der Kante 48 der Zentrieröffnung 15 in der Zentrierscheibe 14 anlegt, sondern nur an zwei Seitenflächen, so dass sich der Spannzapfen entlang einer die beiden Spannfutter miteinander verbindenden Geraden lateral verschieben kann. Dies erlaubt auch unter ungünstigen Bedingungen, beispielsweise unter dem Einfluss thermisch bedingter Abmessungsänderungen des Spannteils, eine hohe Positioniergenauigkeit beim Festspannen des Spannteils an dem Mehrfach-Spannfutter. Um eine geringe laterale Verschiebung des Spannzapfens gegenüber dem Spannfutter zu ermöglichen, kann beispielsweise auch die in die Zentrierscheibe des weiteren Spannfutters eingelassene Öffnung oval ausgebildet sein, und zwar so, dass der Spannzapfen an den beiden geraden Seitenkanten der ovalen Öffnung anliegt, während er sich entlang einer die beiden Spannfutter miteinander verbindenden Geraden lateral verschieben kann.

Der vorgängig beschriebene Spannmechanismus 21, bei dem die beiden Klemmteile - Schieber 22, 23- schwimmend in der Nut 19 der Halteplatte 17 aufgenommen sind, eignet sich im Besonderen zum Festspannen eines mit mehreren Spannzapfen versehenen Spannteils, da sich der Spannmechanismus 21 beim Festspannen des Spannzapfens selber auf den jeweiligen Spannzapfen ausrichten kann.

Natürlich sind beispielsweise auch Spanneinrichtungen mit mehr als zwei Spannfuttern realisierbar. Zum Festspannen von sehr grossen Spannteilen kann beispielsweise eine Spanneinrichtung mit vier Spannfuttern eingesetzt werden. In diesem Fall dient das eine Spannfutter dem Positionieren eines Spannzapfens in X- und in Y-Richtung, während ein zweites Spannfutter den zugeordneten Spannzapfen nur in einer Richtung, beispielsweise in X-Richtung positioniert. Das dritte und vierte Spannfutter schliesslicht dient lediglich dem Einziehen und Fixieren des jeweiligen Spannzapfens. In diesem Fall kann jeweils ein Spannzapfen mit abgedrehtem Zentrierabschnitt eingesetzt werden, so dass der Spannzapfen sich nicht an der Zentrierscheibe ausrichtet. Es versteht sich, dass alle vier Spannfutter dem Einziehen und Festspannen des jeweils zugeordneten Spannzapfens, und damit auch dem Positionieren des Spannteils in Z-Richtung, dienen.

Sofern die Überbestimmungsproblematik auf der Seite des Spannzapfens bzw. des Spannteils gelöst wird, kann jedes Spannfutter eines Mehrfach-Spannfutters ohne Einschränkung auch für das Spannen eines Einfach-Spannteils, d.h. eines Spannteils mit nur einem Spannzapfen, eingesetzt werden.

Zu erwähnen ist, dass anstelle des gezeigten Spannmechanismus beispielsweise auch eine Schraube eingesetzt werden könnte, welche in eine in Z-Richtung von der Stirnseite her in den jeweiligen Spannzapfen eingelassene Gewindebohrung eingeschraubt wird, um den Spannzapfen in Z-Richtung in das Spannfutter zu ziehen und darin zu fixieren.

## Patentansprüche

1. Spanneinrichtung mit einem Spannfutter (3) zum Festspannen eines Spannteils (40) insbesondere in der Form eines Werkstücks, Werkzeugs oder einer Palette, mit am Spannfutter (3) angeordneten ersten Zentrierelementen, welche mit am Spannteil (40) angeordneten weiteren Zentrierelementen derart zusammenarbeiten, dass das Spannteil (40) beim Festspannen am Spannfutter (3) in X- und Y-Richtung ausgerichtet wird, wobei die Zentrierelemente zumindest eine in Z-Richtung federelastisch nachgiebige, mit zumindest einer Öffnung (15) versehene Zentrierscheibe (14) sowie zumindest einen mit einem Zentrierabschnitt (30) versehenen Zapfen umfassen, dessen Zentrierabschnitt (30) sich beim Einführen in die Öffnung (15) an deren Kante(n) (48) anlegt, und wobei das Spannfutter (3) mit zumindest einer die Z-Auflage für das Spannteil (40) definierenden Auflagefläche (10) versehen ist und Mittel (21) zum Fixieren des Spannteils (40) am Spannfutter (3) aufweist, **dadurch gekennzeichnet, dass** die Zentrierscheibe (14) am Spannfutter (3) angeordnet ist und ein am Spannteil (40) zu fixierender Spannzapfen (29) vorgesehen ist, an dem der genannte Zentrierabschnitt (30) angeordnet ist.

2. Spanneinrichtung nach Anspruch 1, **dadurch gekennzeichnet, dass** die Zentrierscheibe (14) mit einer runden Öffnung (15) versehen ist und der Spannzapfen (29) zumindest teilweise mit einem kegelstumpfmantelförmigen Zentrierabschnitt (30) zum Ausrichten des Spannzapfens (29) in X- und Y-Richtung an der Kante (48) der Öffnung (15) versehen ist.

3. Spanneinrichtung nach Anspruch 1 oder 2, **dadurch gekennzeichnet, dass** das Spannfutter (3) mit einer Auflageplatte (8) versehen ist, deren Oberfläche (10) zumindest teilweise die Z-Auflage für das Spannteil (40) bildet, und dass die Zentrierscheibe (14) auf der der Oberfläche (10) gegenüberliegenden Rückseite der Auflageplatte (8) angeordnet ist, wobei die Auflageplatte (8) mit einer Öffnung (9) versehen ist, über welche der Spannzapfen (29) in die Öffnung (15) der Zentrierscheibe (14) einführbar ist.

4. Spanneinrichtung nach Anspruch 3, **dadurch gekennzeichnet, dass** die Auflageplatte (8) an einem Grundkörper (4) befestigt ist und die Zentrierscheibe (14) derart zwischen dem Grundkörper (4) und der Auflageplatte (8) angeordnet ist, dass sie zumindest in Z-Richtung federelastisch nachgiebig ist.

5. Spanneinrichtung nach Anspruch 4, **dadurch gekennzeichnet, dass** die Zentrierscheibe (14) mittels einer Halteplatte (17) am Grundkörper (4) befestigt ist.

6. Spanneinrichtung nach Anspruch 5, **dadurch gekennzeichnet, dass** die Halteplatte (17) mit einem erhöhten Randsteg (18) versehen ist, an dem die Zentrierscheibe (14) derart befestigt ist, dass zwischen deren Mittelteil und dem Mittelteil der Halteplatte (17) ein Zwischenraum (20) verbleibt, der ein federelastisches Auslenken der Zentrierscheibe (14) in Richtung der Halteplatte (17) ermöglicht.

7. Spanneinrichtung nach Anspruch 5 oder 6, **dadurch gekennzeichnet, dass** die Halteplatte (17) mit einer Nut (19) zur schwimmenden Aufnahme eines Spannmechanismus (21) versehen ist.

8. Spanneinrichtung nach einem der Ansprüche 3 bis 7, **dadurch gekennzeichnet, dass** in die die Z-Auflage bildende Oberfläche (10) der Auflageplatte (8) zumindest eine weitere Öffnung oder Nut (11, 12) eingelassen ist, welche zur Aufnahme eines an dem Spannteil (40) anzubringenden Zentrierelements, insbesondere eines Ausrichtstifts (34), ausgebildet ist und dem Ausrichten des Spannteils (40) bezüglich der Winkellage um die Z-Achse (1) dient.

9. Spanneinrichtung nach einem der Ansprüche 3 bis 7, **dadurch gekennzeichnet, dass** das Spannfutter (3) mit zumindest einem exzentrisch angeordneten Ausrichtelement, insbesondere einem Ausrichtnocken (37), versehen ist, der beim Festspannen des Spannteils (40) am Spannfutter (3) in eine in das Spannteil (40) eingelassene Ausnehmung (42) eindringt und dem Ausrichten des Spannteils (40) bezüglich der Winkellage um die Z-Achse (1) dient.

10. Spanneinrichtung nach einem der vorhergehenden Ansprüche, **dadurch gekennzeichnet, dass** der Spannmechanismus (21) zwei schieberförmige Elemente (22, 23) umfasst, welche quer zur Z-Achse (1) relativ zueinander verschiebbar sind und mit zumindest je einem Stift (24, 25) zum Einziehen und Fixieren des am Spannteil (40) angeordneten Spannzapfens (29) versehen sind.

11. Spanneinrichtung nach einem der vorhergehenden Ansprüche, **dadurch gekennzeichnet, dass** der Spannzapfen (29) auswechselbar am Spannteil (40) angeordnet ist.

12. Spanneinrichtung nach Anspruch 11, **dadurch gekennzeichnet, dass** der Spannzapfen (29) mit einem Gewinde (33) zum Befestigen am Spannteil (40) versehen ist.

13. Spanneinrichtung nach Anspruch 11 oder 12, **dadurch gekennzeichnet, dass** der Spannzapfen (29) mit einer ringförmigen Anschlagfläche (32) versehen ist, welche sich beim Fixieren des Spannzapfens (29) am Spannteil (40) an dessen Unterseite (45) anlegt.

14. Spanneinrichtung nach einem der vorhergehenden Ansprüche, **dadurch gekennzeichnet, dass** in die Oberfläche des Spannfutters (3) zwei Nuten (11, 12) eingelassen sind, welche um 90° zueinander versetzt sind.

15. Spanneinrichtung nach einem der Ansprüche 9 bis 14, **dadurch gekennzeichnet, dass** das Spannteil (40) zumindest abschnittweise eine plane, die Z-Auflage bildende Unterseite (45) aufweist, und dass in die Unterseite (45) zumindest eine Befestigungsbohrung (41) zum Fixieren des Spannzapfens (29) und zumindest eine weitere Öffnung oder Bohrung (43, 44) zur Fixierung eines Ausrichtelements (34, 35) und/oder eine Ausnehmung (42) zur Aufnahme eines am Spannfutter (3) angeordneten Ausrichtnockens (37) eingelassen ist.

16. Spanneinrichtung mit zumindest zwei Spannfuttern gemäss einem der vorhergehenden Ansprüche zum Festspannen eines mit zumindest zwei Spannzapfen versehenen Spannteils, wobei beide Spannfutter mit je einer in Z-Richtung federelastisch nachgiebigen, mit je einer Öffnung versehene Zentrierscheibe versehen sind, und wobei der eine Spannzapfen mit einem Zentrierabschnitt zum Ausrichten des Spannzapfens in X- und Y-Richtung versehen ist, während der andere Spannzapfen mit einem Zentrierabschnitts zum Ausrichten des Spannzapfens in X- oder Y-Richtung versehen ist.

17. Spanneinrichtung mit zumindest zwei Spannfuttern gemäss einem der vorhergehenden Ansprüche zum Festspannen eines mit zumindest zwei Spannzapfen versehenen Spannteils, wobei beide Spannfutter mit je einer in Z-Richtung federelastisch nachgiebigen, mit je einer Öffnung versehene Zentrierscheibe versehen sind, und wobei die in die Zentrierscheibe des ersten Spannfutters eingelassene Öffnung zum Ausrichten eines am ersten Spannzapfen angeordneten Zentrierabschnitts in X- und Y-Richtung ausgebildet ist, während die in die Zentrierscheibe des zweiten Spannfutters eingelassene Öffnung zum Ausrichten eines am ersten Spannzapfen angeordneten Zentrierabschnitts in X- oder Y-Richtung ausgebildet ist.

## Claims

1. Clamping device with a chuck (3) for clamping a part (40) to be clamped, in particular in the form of a workpiece, tool or a pallet, having first centring elements arranged on the chuck (3), which interact with further centring elements arranged on the part (40) to be clamped in such a way that the part (40) to be clamped is aligned in the X and Y direction when it is clamped on the chuck (3), the centring elements comprising at least one centring disc (14) which is resiliently compliant in the z direction and is provided with at least one opening (15), and also at least one spigot provided with a centring section (30), of which the centring section (30), when inserted into the opening (15), rests on the edge(s) (48) of the latter, and the chuck (3) being provided with at least one supporting surface (10) defining the Z support for the part (40) to be clamped and having means (21) for fixing the part (40) to be clamped to the chuck (3), **characterized in that** the centring disc (14) is arranged on the chuck (3) and a clamping spigot (29) to be fixed to the part (40) to be clamped is provided, on which the aforementioned centring section (30) is arranged.

2. Clamping device according to Claim 1, **characterized in that** the centring disc (14) is provided with a round opening (15) and the clamping spigot (29) is at least partly provided with a centring section (30) shaped like the circumference of a truncated cone in order to align the clamping spigot (29) in the X and Y direction on the edge (48) of the opening (15).

3. Clamping device according to Claim 1 or 2, **characterized in that** the chuck (3) is provided with a supporting plate (8) of which the surface (10) at least partly forms the Z support for the part (40) to be clamped, and **in that** the centring disc (14) is arranged on the rear side of the supporting plate (8), opposite the surface (10), the supporting plate (8) being provided with an opening (9) via which the clamping spigot (29) can be inserted into the opening (15) in the centring disc (14).

4. Clamping device according to Claim 3, **characterized in that** the supporting plate (8) is fixed to a base body (4) and the centring disc (14) is arranged between the base body (4) and the supporting plate (8) in such a way that it is resiliently compliant, at least in the Z direction.

5. Clamping device according to Claim 4, **characterized in that** the centring disc (14) is fixed to the base body (4) by means of a retaining plate (17).

6. Clamping device according to Claim 5, **characterized in that** the retaining plate (17) is provided with an elevated edge land (18), to which the centring disc (14) is fixed in such a way that, between the central part of the latter and the central part of the retaining plate (17), there remains an interspace (20) which permits the centring disc (14) to deflect resiliently in the direction of the retaining plate (17).

7. Clamping device according to Claim 5 or 6, **characterized in that** the retaining plate (17) is provided with a groove (19) to hold a clamping mechanism (21) in a floating manner.

8. Clamping device according to one of Claims 3 to 7, **characterized in that** at least one further opening or groove (11, 12) is let into the surface (10) of the supporting plate (8) forming the Z support, being designed to accommodate a centring element, in particular an aligning pin (34), to be fitted to the part (40) to be clamped, and is used to align the part (40) to be clamped with respect to the angular position about the Z axis (1).

9. Clamping device according to one of Claims 3 to 7, **characterized in that** the chuck (3) is provided with at least one eccentrically arranged aligning element, in particular an alignment cam (37) which, when the part (40) to be clamped is clamped to the chuck (3), penetrates into a recess (42) let into the part (40) to be clamped and is used to align the part (40) to be clamped with respect to the angular position about the Z axis (1).

10. Clamping device according to one of the preceding claims, **characterized in that** the clamping mechanism (21) comprises two slider-like elements (22, 23), which can be displaced relative to each other transversely with respect to the Z axis (1) and are each provided with at least one pin (24, 25) to draw in and fix the clamping spigot (29) arranged on the part (40) to be clamped.

11. Clamping device according to one of the preceding claims, **characterized in that** the clamping spigot (29) is arranged on the part (40) to be clamped such that it can be interchanged.

12. Clamping device according to Claim 11, **characterized in that** the clamping spigot (29) is provided with a thread (33) for fixing to the part (40) to be clamped.

13. Clamping device according to Claim 11 or 12, **characterized in that** the clamping spigot (29) is provided with an annular stop surface (32) which, when the clamping spigot (29) is fixed to the part (40) to be clamped, rests on the underside (45) of the latter.

14. Clamping device according to one of the preceding claims, **characterized in that** two grooves (11, 12) which are offset by 90° in relation to each other are let into the surface of the chuck (3).

15. Clamping device according to one of Claims 9 to 14, **characterized in that** the part (40) to be clamped has a planar underside (45) forming the Z support, at least in some sections, and **in that** at least one fixing hole (41) for fixing the clamping spigot (29) and at least one further opening or hole (43, 44) for fixing an aligning element (34, 35) and/or a recess (42) to accommodate an aligning cam (37) arranged on the chuck (3) are let into the underside (45).

16. Clamping device having at least two chucks according to one of the preceding claims for clamping a part to be clamped provided with at least two clamping spigots, both chucks each being provided with a centring disc which is resiliently compliant in the z direction and is each provided with an opening, and the one clamping spigot being provided with a centring section for aligning the clamping spigot in the X and Y direction, while the other clamping spigot is provided with a centring section for aligning the clamping spigot in the X or Y direction.

17. Clamping device having at least two chucks according to one of the preceding claims for clamping a part to be clamped provided with at least two clamping spigots, both chucks each being provided with a centring disc which is resiliently compliant in the Z direction and is each provided with an opening, and the opening let into the centring disc of the first chuck being designed to align a centring section arranged on the first clamping spigot in the X and Y direction, while the opening let into the centring disc of the second chuck is designed to align a centring section arranged on the first clamping spigot in the X or Y direction.

## Revendications

1. Dispositif de serrage doté d'un mandrin de serrage (3) pour le serrage fixe d'une pièce de serrage (40), en particulier sous forme d'une pièce à usiner, d'un outil, ou d'une palette, comprenant des premiers éléments de centrage disposés sur le mandrin de serrage (3), lesquels coopèrent avec d'autres éléments de centrage disposés sur la pièce de serrage (40) de telle sorte que la pièce de serrage (40), lors d'un serrage fixe sur le mandrin de serrage (3), est orientée dans les directions X et Y, les éléments de centrage comportant au moins une rondelle de centrage (14) au moins flexible de manière élastique dans la direction Z, pourvue d'au moins une ouverture (15) ainsi qu'au moins un tourillon pourvu d'une section de centrage (30), dont la section de centrage (30), lorsqu'elle est introduite dans l'ouverture (15), s'appuie contre l'arête(les arêtes) de celle-ci (48), et le mandrin de serrage (3) étant pourvu d'au moins une surface d'appui (10) définissant l'appui en z pour la pièce de serrage (40) et comprenant des moyens (21) destinés à fixer la pièce de serrage (40) sur le mandrin de serrage (3), **caractérisé en ce que** la rondelle de centrage (14) est disposée sur le mandrin de serrage (3) et un tourillon de serrage (29) à fixer sur la pièce de serrage (40) est prévu, sur lequel est disposée la section de centrage (30) citée.

2. Dispositif de serrage selon la revendication 1, **caractérisé en ce que** la rondelle de centrage (14) est pourvue d'une ouverture ronde (15) et le tourillon de serrage (29) est pourvu au moins en partie d'une section de centrage en forme de revêtement tronconique (30) destinée à orienter le tourillon de serrage (29) dans les directions X et Y sur l'arête (48) de l'ouverture (15).

3. Dispositif de serrage selon la revendication 1 ou 2, **caractérisé en ce que** le mandrin de serrage (3) est pourvu d'une plaque d'appui (8), dont la surface (10) forme au moins en partie l'appui en Z pour la pièce de serrage (40), et **en ce que** la rondelle de serrage (14) est disposée sur la face arrière de la plaque d'appui (8) opposée à la surface (10), la plaque d'appui (8) étant pourvue d'une ouverture (9) par l'intermédiaire de laquelle le tourillon de serrage (29) peut être introduit dans l'ouverture (15) de la rondelle de serrage (14).

4. Dispositif de serrage selon la revendication 3, **caractérisé en ce que** la plaque d'appui (8) est fixée sur un corps de base (4) et la rondelle de centrage (14) est disposée entre le corps de base (4) et la plaque d'appui (8) de telle sorte qu'elle est flexible de manière élastique au moins dans la direction Z.

5. Dispositif de serrage selon la revendication 4, **caractérisé en ce que** la rondelle de centrage (14) est fixée sur le corps de base (4) au moyen d'une plaque de maintien (17).

6. Dispositif de serrage selon la revendication 5, **caractérisé en ce que** la plaque de maintien (17) est pourvue d'une nervure latérale surélevée (18), sur laquelle la rondelle de centrage (14) est fixée de telle sorte qu'un intervalle (20) demeure entre la partie centrale de ladite rondelle et la partie centrale de la plaque de maintien (17), lequel intervalle permet une déviation élastique de la rondelle de centrage (14) en direction de la plaque de maintien (17).

7. Dispositif de serrage selon la revendication 5 ou 6, **caractérisé en ce que** la plaque de maintien (17) est pourvue d'une rainure (19) destinée au logement flottant d'un mécanisme de serrage (21).

8. Dispositif de serrage selon l'une quelconque des revendications 3 à 7, **caractérisé en ce qu'**au moins une autre ouverture ou rainure (11, 12) est pratiquée dans la surface (10) de la plaque d'appui (8) formant l'appui en Z, laquelle ouverture ou rainure est conçue pour recevoir un élément de centrage à aménager sur la pièce de serrage (40), en particulier une goupille d'orientation (34), et sert à orienter la pièce de serrage (40) par rapport à la position angulaire autour de l'axe Z (1).

9. Dispositif de serrage selon l'une quelconque des revendications 3 à 7, **caractérisé en ce que** le mandrin de serrage (3) est pourvu d'au moins un élément d'orientation disposé de manière excentrique, en particulier d'une came d'orientation (37), qui, lors du serrage de la pièce de serrage (40) sur le mandrin de serrage (3), pénètre dans l'évidement (42) pratiqué dans la pièce de serrage (40) et sert à orienter la pièce de serrage (40) par rapport à la position angulaire autour de l'axe Z (1).

10. Dispositif de serrage selon l'une quelconque des revendications précédentes, **caractérisé en ce que** le mécanisme de serrage (21) comporte deux éléments en forme de coulisseau (22, 23), lesquels sont mobiles l'un par rapport à l'autre transversalement à l'axe Z (1) et sont pourvus d'au moins respectivement une goupille (24, 25) pour introduire et fixer le tourillon de serrage (29) disposé sur la pièce de serrage (40).

11. Dispositif de serrage selon l'une quelconque des revendications précédentes, **caractérisé en ce que** le tourillon de serrage (29) est disposé de manière interchangeable sur la pièce de serrage (40).

12. Dispositif de serrage selon la revendication 11, **caractérisé en ce que** le tourillon de serrage (29) est pourvu d'un filet (33) pour être fixé sur la pièce de serrage (40).

13. Dispositif de serrage selon la revendication 11 ou 12, **caractérisé en ce que** le tourillon de serrage (29) est pourvu d'une surface d'appui annulaire (32), laquelle, lors de la fixation du tourillon de serrage (29) sur la pièce de serrage (40), s'appuie sur la face inférieure de celle-ci.

14. Dispositif de serrage selon l'une quelconque des revendications précédentes, **caractérisé en ce que** deux rainures (11, 12) sont pratiquées dans la surface du mandrin de serrage (3), lesquelles sont décalées de 90° l'une par rapport à l'autre.

15. Dispositif de serrage selon l'une quelconque des revendications 9 à 14, **caractérisé en ce que** la pièce de serrage (40) comprend au moins par section une face inférieure (45) formant l'appui en Z, et **en ce qu'**au moins un alésage de fixation (41) destiné à fixer le tourillon de serrage (29) et au moins une(e) autre ouverture ou alésage (43, 44) destiné(e) à fixer un élément d'orientation (34, 35) et/ou un évidement (42) destiné à loger une came d'orientation (37) disposée sur le mandrin de serrage (3) sont pratiqués dans la face inférieure (45).

16. Dispositif de serrage comprenant au moins deux mandrins de serrage selon l'une quelconque des revendications précédentes destiné à serrer fixement une pièce de serrage pourvue d'au moins deux tourillons de serrage, deux mandrins de serrage étant pourvus de respectivement une rondelle de centrage flexible de manière élastique dans la direction Z, pourvue respectivement d'une ouverture, et l'un des tourillons de serrage étant pourvu d'une section de centrage destinée à orienter le tourillon de serrage dans les directions X et Y, tandis que l'autre tourillon de serrage est pourvu d'une section de centrage destinée à orienter le tourillon de serrage dans la direction X ou Y.

17. Dispositif de serrage doté d'au moins deux mandrins de serrage selon l'une quelconque des revendications précédentes destiné à serrer fixement une pièce de serrage pourvue d'au moins deux tourillons de serrage, les deux mandrins de serrage étant pourvus respectivement d'une rondelle de centrage flexible de manière élastique dans la direction Z, pourvue respectivement d'une ouverture, et l'ouverture pratiquée dans la rondelle de centrage du premier mandrin de serrage étant conçue pour orienter une section de centrage disposée sur le premier tourillon de centrage dans la direction X et Y, tandis que l'ouverture pratiquée dans la rondelle de centrage du second mandrin de serrage est conçue pour orienter une section de centrage disposée sur le premier tourillon de serrage dans la direction X ou Y.
